# EUROPEAN PATENT APPLICATION

(11) **EP 4 796 264 A1**
(43) Date of publication of application: **26.08.2026**
(21) Application number: 24890743.8
(22) Date of filing: 14.11.2024
(51) Int. Cl.: B25J 9/00

(54) **MECHANICAL HAND AND BIONIC MECHANICAL FINGER THEREOF**

(30) Priority: 15.11.2023 CN 202323082959 U; 15.11.2023 CN 202323086175 U; 15.11.2023 CN 202323082973 U
(71) Applicant: Beijing Tashan Technology Co., Ltd., Beijing 102308 (CN)
(72) Inventor: SUN, Tengchen, Beijing 102308 (CN); ZENG, Fanyou, Beijing 102308 (CN); WANG, Zhen, Beijing 102308 (CN)
(74) Representative: Yang, Shu
(86) International application number: PCT/CN2024/131902
(87) International publication number: WO 2025/103388

(57) **Abstract**

This invention relates to a robotic hand and its bionic mechanical finger, comprising a bionic finger sleeve, a tactile sensing unit, a capacitance-to-digital converter (CDC) circuit, a digital processing circuit, and an analog switch array. The implementation of this invention achieves tactile sensitivity comparable to or even surpassing that of a human hand through the design of the sensor structure, the inner insulating layer, and the cooperation of a CDC (Chip-to-Digital Converter). The grounded upper electrode and the self-capacitance design of the lower electrode ensure accuracy during pressure detection, reduce dependence on chip resources, and, combined with the limitations of the capacitance design, achieve good response of the mechanical finger in everyday grasping scenarios.

## Description

### Technical Field

This invention relates to the field of humanoid robots, and more particularly to the robotic hand of a humanoid robot and its bionic mechanical fingers.

### Background Technology

Humanoid robots are a current research hotspot. Humanoid mechanical fingers utilize biomimetic finger sleeves to create a shape that conforms to the appearance of a human finger. Windows are opened at the fingertips and pads of these sleeves to expose the sensing surfaces of tactile sensors. Similar solutions are illustrated in CN 202210387048.7, which describes creating a fixing groove at the distal phalanx of a robotic finger to place a pressure-sensing component for mechanical sensing, and CN201621199954.0, which describes placing exposed tactile sensors on the fingertips of the base module of the finger structure to sense objects being grasped.

For anthropomorphic mechanical fingers, a core attribute is achieving tactile sensitivity comparable to that of a human hand. The flexible capacitive three-dimensional force vector tactile sensor disclosed in CN 201920633712.5 uses a raised upper electrode and an electrode array below to sense the magnitude and direction of three-dimensional force. Simultaneously, it is combined with a capacitance-to-digital converter (CDC) circuit, such as ADI7142 or ADI7147, employing a Δ-∑ modulation method to directly convert the measured capacitance value into a digital value by repeatedly charging and discharging the measured capacitor and comparing it with a reference capacitor (see: US Patent Number: 5,134,401). This improves the measurement sensitivity of capacitance to the 1ff level. In testing, a single raised electrode achieved a pressure resolution of 0.01 grams, surpassing the 0.019 - gram pressure resolution of a human finger, thus effectively meeting the requirement of anthropomorphic mechanical fingers to achieve tactile sensitivity comparable to that of a human hand.
force sensing in anthropomorphic robotic fingers requires a design that incorporates multiple protrusions to support different areas, preventing localized collapse or limpness. The CDC (Cyclic Detector) design can only sample one capacitance value at a time, with each sample taking approximately 3 milliseconds. More capacitance sampling increases the duration of a single detection cycle. Furthermore, the 3D force vector tactile sensor structure requires a large number of coupled CDC channels; the sensing array formed by four electrodes needs to sample at least four capacitance values. With multiple protrusions in the robotic finger, the overall tactile response speed is compromised. On the other hand, due to the anthropomorphic design, the robotic finger is elongated, and the limited internal space affects chip size selection. For integrated design, electronic analog switches such as MOSFETs are integrated into the chip. Considering the space required for other components, the size of the CDC is limited, resulting in very limited chip resources.

### Summary of the Invention

This invention aims to achieve tactile sensitivity comparable to that of a human hand in a mechanical finger while making full use of limited chip resources to solve the response speed problem of the mechanical finger.

A bionic mechanical finger is provided, comprising a bionic finger sleeve, a tactile sensing unit, a capacitance-to -digital converter circuit, a digital processing circuit, and an analog switch array. The bionic finger sleeve is hollow, with the tactile sensing unit, capacitance-to-digital converter circuit, digital processing circuit, and analog switch array housed within the hollow portion of the bionic finger sleeve. The tactile sensing unit has at least one flexible upper electrode located on the fingertip and /or finger pad, exposed through a window in the bionic finger sleeve or attached to a corresponding flexible portion of the bionic finger sleeve. The upper electrode has an anthropomorphic shape on its upward side and a protrusion on its downward side. The outer surface of each protrusion is an elastic curved surface. All upper electrodes together form at least one main protrusion and at least one auxiliary protrusion. The main protrusion is located below the arched portion of the fingertip and/or finger pad, and at least three lower electrodes are located below the main protrusion. The auxiliary protrusions are located in other positions, and one or two lower electrodes are located below the auxiliary protrusions. Each protrusion is connected to its corresponding lower electrode by an inner insulating layer with a thickness between 10 nanometers and 1 millimeter. The downward projection of the protrusion covers at least a portion of the area of each corresponding lower electrode. The indirect contact area of the protrusions on each corresponding lower electrode is affected by the deformation of the upper electrode due to external forces. The upper electrode is configured to couple to ground when the bionic mechanical finger contacts the touch object, and to form X mutual capacitances or self-capacitances before the bionic mechanical finger contacts the touch object, where X can be zero, one, or more. Each lower electrode involved in pressure detection is coupled to the acquisition channel of a capacitor-to-digital converter circuit via an analog switch array, and forms a self-capacitance as a self-capacitance detection electrode when the bionic mechanical finger contacts the touch object. The lower electrodes of the main protrusions form Y self-capacitances, where Y≥3, and the lower electrodes of the auxiliary protrusions form Z self-capacitances, where Z≥1. The number of each capacitor is configured to have a limited relationship K₁ *X+K ₂ *Y+K ₃ *Z<= N, where N is 0.05-0.02 seconds , where K ₁ is the sampling time of a single corresponding capacitor determined by the size of the upper electrode, K₂ is the sampling time of a single self-capacitor determined by the size of the lower electrode of the main protrusion, and K₃ is the sampling time of a single self-capacitor determined by the size of the lower electrode of the auxiliary protrusion; digital processing circuit, used for logic processing and/or logic sequence control, coupled with capacitor-to-digital converter circuit.

The implementation of this invention can achieve the following technical effects: by means of sensor structure, inner insulation layer design and CDC cooperation, it can achieve tactile sensitivity comparable to or even surpassing that of human hand. The design of grounding the upper electrode and using self-capacitance for the lower electrode can ensure the accuracy of pressure detection, reduce dependence on chip resources, and achieve good response of mechanical finger in daily grasping scenarios by combining the limiting rules of capacitance design.

### Attached Figure Description

Figure 1a shows the structure of an exemplary bionic mechanical finger window-opening design;
Figure 1b shows the structure of an exemplary integrated bionic mechanical finger;
Figure 2 shows the composition of an exemplary tactile sensing unit;
Figure 3 shows a schematic diagram of the flexible upper electrode and the outer shell assembly structure;
Figure 4 shows a schematic diagram of the control module structure;
Figure 5 shows a schematic diagram of the contact between the lower electrode plate and the flexible upper electrode.
Figure 6 shows a schematic diagram of the inner insulating layer between the protrusion and the lower electrode;
Figure 7 shows a schematic diagram of the coupling between the upper and lower electrode channels;
Figure 8 shows a schematic diagram of proximity detection using self-capacitance.
Figure 9a shows the coupling structure between the conductive bionic finger sleeve and the control module;
Figure 9b shows the coupling structure between the conductive frame and the control module;
Figure 10 shows a schematic diagram of the mutual capacitance formed by complex electrodes;
Figure 11a shows a schematic diagram of the thumb's raised design;
Figure 11b shows a schematic of the raised design for the middle or index finger;
Figure 11c shows a schematic diagram of the raised design for the ring finger; and
Figure 11d shows a schematic diagram of the raised design for the little finger.

### Detailed Implementation

The technical solutions of the present invention will be clearly and completely described below with reference to the accompanying drawings in the embodiments of the present invention.

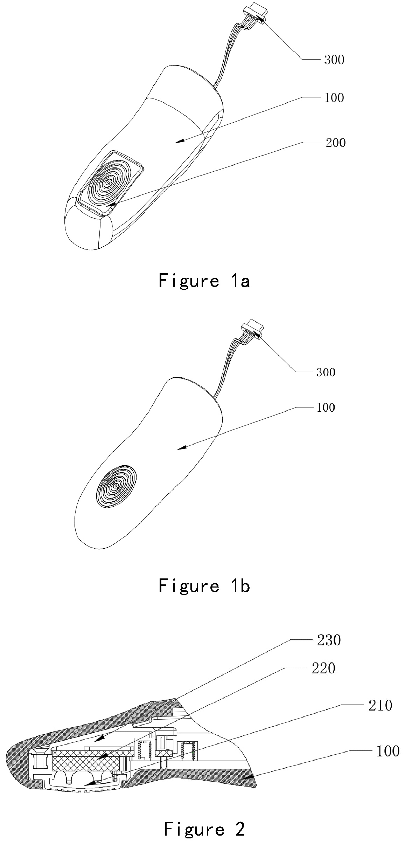

Figures 1a and 1b show the external structure of an exemplary bionic mechanical finger, which is formed by a bionic finger sleeve 100 to simulate the shape of a human finger. The bionic finger sleeve 100 is hollow, and a tactile sensing unit 200 is built into the hollow part. The bionic finger sleeve 100 is insulated from the tactile sensing unit 200.

Figure 2 illustrates the composition of an exemplary tactile sensing unit 200. The tactile sensing unit 200 includes a flexible upper electrode 210, a control module 220, and a housing assembly 230. The upper electrode 210 is located on the fingertip and /or finger pad, and can be exposed through a window in the bionic finger sleeve 100 as shown in Figure 1a , or completely hidden inside the finger sleeve as shown in Figure 1b, and is transmitted through the holding force of the flexible thin wall attached to the bionic finger sleeve 100 .

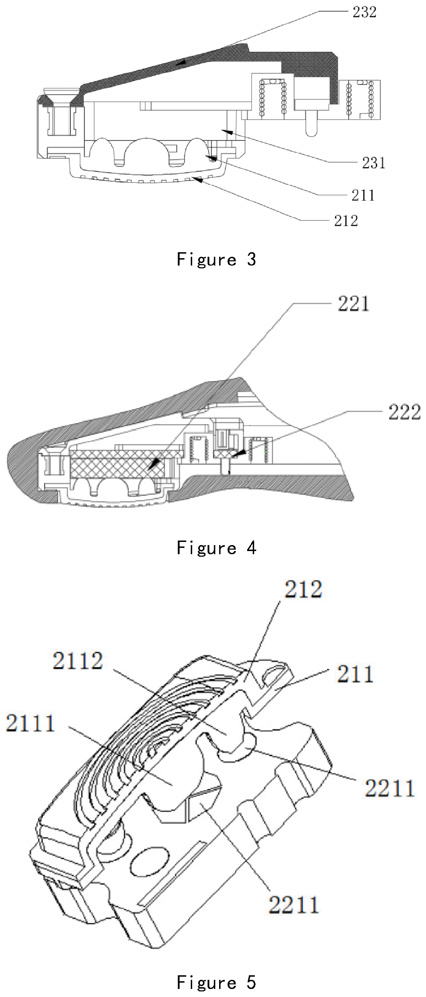

Figure 3 shows a schematic diagram of the flexible upper electrode and the outer shell assembly. The flexible upper electrode serves as the inner conductive layer 211, and an outer insulating layer 212 is disposed on the surface of the inner conductive layer 211. The outer shell assembly 230 includes a middle frame 231 and a rear cover 232. The middle frame 231 is used to support and fix the control module 220 and the flexible upper electrode 210.

Figure 4 shows a schematic diagram of the control module structure. The control module 220 includes a lower electrode plate 221, a control circuit board 222, and a capacitor-to-digital converter (CDC), a digital processing circuit, and an analog switch array integrated within the control circuit board 222. The digital processing circuit can be a sequential controller, implementing logical sequence control entirely through hardware; alternatively, the digital processing circuit can be a microprocessor, such as a CPU or MCU, achieving logical processing and logical sequence control through a combination of hardware and software. The analog switch array can use transistors, such as MOSFETs, to form an on/off control array for high-speed electronic control. The lower electrode plate 221 and the control circuit board 222 can be combined into a single control module circuit board.

Figure 5 shows a schematic diagram of the contact between the lower electrode plate and the flexible upper electrode. The inner conductive layer 211 can be made of conductive silicone, and the surface insulating layer 212 is made of waterproof, wear-resistant, and antistatic material, such as insulating varnish or insulating film, for example, composed of insulating silicone. The two are manufactured through an integral injection molding process, ensuring that there are no air gaps between them, preventing displacement and guaranteeing force transmission. The upper side of the inner conductive layer 211 forms an anthropomorphic shape, simulating the appearance of a human finger. The lower side has protrusions, and the outer surface of each protrusion is a downwardly convex elastic curved surface.

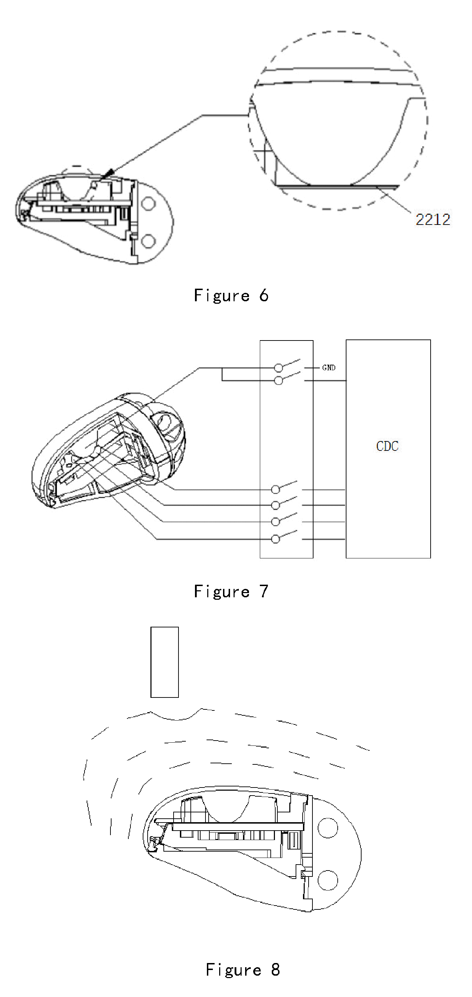

Upper electrodes can be one or multiple. The former is formed by covering the outside of a single piece of conductive silicone with insulating silicone, while the latter can use multiple mutually insulated conductive silicone pieces located in different areas, covered by a single piece of insulating silicone. Regardless of whether there is one or multiple upper electrodes, all upper electrodes together form at least one main protrusion 2111 and at least one auxiliary protrusion 2112. The main protrusion 2111 is located below the arched portion of the fingertip and /or finger pad. At least three lower electrodes 2211 are located below the main protrusion 2111, as this area is most sensitive to force and works with the main protrusion to achieve three-dimensional force detection. The auxiliary protrusions 2112 are placed in other locations as needed for mechanical detection and also serve as supports to prevent the conductive silicone 211 from collapsing. One or two lower electrodes 2211 are located below the auxiliary protrusions 2112, working with them to achieve normal force or two-dimensional force detection. The downward projections of protrusions 2111 and 2112 at least cover a portion of the area of each corresponding lower electrode. The protrusions involved in the deformation of the upper electrode due to external force have indirect contact areas on each corresponding lower electrode. Indirect contact refers to the contact between the upper and lower electrodes through the inner insulating layer. As shown in Figure 6, an inner insulating layer 2212 with a thickness between 10 nanometers and 1 millimeter is provided between each protrusion and the corresponding lower electrode. The inner insulating layer 2212 is formed by forming a coating with insulating ink. If the thickness of the insulating ink is 10 micrometers and the dielectric constant of the insulating ink is 3, according to the capacitance formula C = ε_{r *} ε_{0 *} A/d, ε_{0 =} 8.854187817 x 10⁻¹² F /m, where ε₀ is the vacuum dielectric constant and εᵣ is the relative dielectric constant, the capacitance of a contact area of 1 mm² is 886 * 3 = 2.66 pF · The actual capacitance is an air capacitor and an insulating ink connected in series. Moving away from 10 micrometers, the capacitance becomes a series connection of 0.886pF and 2.66pF, dropping to 0.66pF, a change equivalent to 2pF. According to the high-precision capacitance measurement of the aforementioned sensing structure, this change can reach 4 million. If MEMS technology is used, an insulating coating of 1µm would suffice, resulting in a change of only 0.1mm^{2.}

The upper electrode 210 is configured to couple to ground when the bionic robotic finger contacts the touch object, and to form X mutual capacitances or self-capacitances before the bionic robotic finger contacts the touch object, where X can be zero, one, or more. The coupling of the upper electrode 210 to ground when the bionic robotic finger contacts the touch object is crucial, as it forms a shield. For capacitance, the influence of the ambient electric field and the robot's own metal on detection needs to be considered. Grounding shielding effectively avoids external electric field interference during force measurement, and simultaneously provides capacitance to ground for the lower electrode's self-capacitance detection. The mutual capacitances or self-capacitances built by the upper electrode 210 before the bionic robotic finger contacts the touch object are primarily used to form proximity sensing, detecting the approach of external objects. Zero capacitances indicate that proximity sensing is disabled or canceled, and the upper electrode simply serves as a grounding shield for pressure detection. In this alternative, the upper electrode can be directly connected to the ground wire on the circuit board. One allows for basic proximity sensing; more mutual capacitances, such as forming two or more different effective sensing electric field heights, can further sense the relative approach speed of objects based on proximity sensing. As shown in Figure 7, for applications where near-sensory perception is desired, a digital processing circuit can be configured to time-division coupled the upper electrode to the acquisition channel or ground of the capacitor-to-digital converter circuit via an analog switch array.

Referring further to Figure 7, each lower electrode involved in pressure detection is configured to use an analog switch array coupled to the acquisition channel of a capacitor-to-digital converter circuit, and to form a self-capacitance as a self-capacitance detection electrode when the bionic mechanical finger contacts the touch object. The advantage of using self-capacitance detection for the lower electrode is that it saves at least half the number of analog switches compared to mutual capacitance. Analog switches are basically integrated chips, so the requirements for chip resources can be reduced, which is beneficial to the design of anthropomorphic mechanical fingers. In the self-capacitance detection scheme, the lower electrodes of the main protrusion form Y self-capacitances, Y≥3, and the lower electrodes of the auxiliary protrusions form Z self-capacitances, Z≥1. To solve the loudness speed problem, ₜₕₑ number of each capacitor formed needs to be configured with a constraint relationship K₁ * X+K_{2 *} Y+K_{3 *} Z<=N, where N is 0.05-0.02 seconds , where K₁ is the sampling time of a single corresponding capacitor determined by the size of the upper electrode, K₂ is the sampling time of a single self-capacitance determined by the size of the lower electrode of the main protrusion, and K₃ is the sampling time of a single self-capacitance determined by the size of the lower electrode of the auxiliary protrusion _{.} The above relationships establish design rules for the number and size of electrodes in the anthropomorphic robotic finger. These rules enable a good response from the robotic finger that meets the requirements of everyday grasping scenarios. The lower limit of N (frequency 30Hz) determines the response that meets the basic scenario requirements, while the upper limit is not necessarily better the more there is. Exceeding 0.02s (frequency 100Hz) will negatively impact pressure detection performance.

Figure 7 illustrates the structural design of the capacitor-to-digital converter circuit coupled to the electrodes via an analog switch array. In applications requiring proximity sensing, based on the structure in Figure 7, as an optional software implementation, the proximity detection capacitor and the self-capacitance of each lower electrode can be sampled sequentially in a time-division manner within each detection cycle. The machine continuously cycles through detection, sampling each capacitor in a time-division manner within each detection cycle. The digital processing circuit can be implemented using a sequential controller, sending the raw data for processing via external interface 300; alternatively, the digital processing circuit can be configured as a microprocessor for local processing, sending the processing results externally via external interface 300. With the digital processing circuit equipped with a microprocessor, as a further optional improvement, the microprocessor can be configured to control the analog switch array to couple the upper electrode to the capacitor-to -digital converter circuit to form proximity detection before the bionic mechanical finger contacts the touch object , and to control the analog switch array to couple the upper electrode to ground to form a shield after the bionic mechanical finger contacts the touch object . That is, by directly dividing the upper electrode into two states based on contact, it is beneficial to save computing resources. Furthermore, based on the self-capacitance variation characteristics of each lower electrode, a stress analysis using a processor-built-in algorithm can reduce computational power requirements. Additionally, for the capacitance obtained from sampling the upper electrode as proximity detection data, a Spiking Neural Network (SNN) is used for analysis. Since the number of proximity detection capacitors is small and their characteristic variations are complex, the sampling SNN analysis method can significantly improve accuracy. The combination of these two analysis methods achieves a good balance in various aspects.

Figure 8 shows a schematic diagram of proximity detection using self-capacitance. During coupling between the upper electrode and the capacitance-to-digital converter circuit, the capacitance-to-digital converter circuit is configured to acquire at least the self-capacitance of the upper electrode. Self-capacitance offers the advantage of a longer sensing distance in proximity detection compared to mutual capacitance, while mutual capacitance is less sensitive to the environment and allows for the formation of electric fields at different heights to further analyze the approach speed. Both have their advantages and disadvantages, and can be selected in combination according to the requirements, or both can be used together to sense proximity.

There are many ways to sense proximity through mutual capacitance. As examples, three examples are given below.

As an optional exemplary solution, referring to Figures 1a, 1b, 3, and 9a, the bionic finger sleeve 100 has a conductive function and can be used as a shield to eliminate external interference. The outer surface of the bionic finger sleeve 100 needs to be insulated, including but not limited to insulating varnish or insulating film. The upper electrode is insulated from the bionic finger sleeve 100. The middle frame 231 is made of insulating material to isolate the control module 220 from the bionic finger sleeve 100, so that most areas of the bionic finger sleeve 100 and the control module 220 are isolated and insulated. The middle frame 231 is set on the circuit board and supports the upper electrode. The lower electrode is set on the top surface of the circuit board. The raised curved surface passes through the middle frame 231 and indirectly contacts the lower electrode through the inner insulating layer. The middle frame 231 has an opening near the tail, where the force is small and it is not easily affected by deformation. The control module 220 has a bionic finger sleeve connection module 2231 at a designated position, including but not limited to using an elastic probe, so that the corresponding interface 224 of the control circuit board 222 is connected to the bionic finger sleeve 100. The microprocessor on the control circuit board 222 controls the bionic finger sleeve 100 to be coupled or disconnected from the ground through an analog switch array, and/or the capacitance-to-digital conversion circuit couples the bionic finger sleeve through the analog switch array. It can control the bionic finger sleeve 100 as a ground signal, shield other interference and improve test accuracy. The bionic finger sleeve 100 can also be set as an electrode, which can be used as a self-capacitor, and/or form a mutual capacitance with the upper electrode for use as a proximity sensor. Furthermore, during the coupling between the upper electrode and the capacitance-to-digital conversion circuit, the capacitance-to-digital conversion circuit is configured to acquire at least the mutual capacitance between the upper electrode and the bionic finger sleeve as a means of mutual capacitance sensing proximity. After the bionic mechanical finger contacts the touch object, the microprocessor controls the bionic finger sleeve and the upper electrode to be coupled to ground through an analog switch array, with both forming a shield to enclose the lower electrode. Referring to Figures 1a and 3, the bionic finger sleeve 100 has a window, and the outer surface of the upper electrode is covered with an outer insulating layer 212 and exposed through the window; or, referring to Figure 1b, the part of the bionic finger sleeve 100 covering the upper electrode is insulated from other parts of the bionic finger sleeve, and the other parts have conductive properties to be time-divisionally coupled to the acquisition channel of the capacitance-to-digital conversion circuit or ground .

As another alternative exemplary solution, referring to Figures 1a, 1b, 3, and 9b, the bionic finger sleeve 100 is made of insulating material, and the middle frame 231 is made of metal material and is located on the circuit board to support and fix the control module 220 and the upper electrode 210. The middle frame 231 is located around the upper electrode, and the surface in contact with the upper electrode is insulated to form a middle frame insulating layer 233, including but not limited to spraying insulating paint or coating, thereby insulating and isolating the upper electrode from the middle frame 231. The control module 220 includes a flexible body 2232 connecting the middle frame and an external interface 224. The flexible body 2232 connecting the middle frame can be set as conductive cloth and arranged on the control circuit board 222 and the middle frame 231 at a designated position, ensuring a stable connection and conduction between the two while locking the control circuit board 222 and the middle frame 231. The middle frame 231 is connected to the control circuit board 222 via the flexible body 223. The microprocessor controls the coupling or disconnection of the middle frame 231 to ground via an analog switch array, and/or the capacitance-to-digital conversion circuit couples the middle frame 231 via the analog switch array, so that the middle frame 231 can serve as a ground signal, shielding other interference and improving test accuracy. At the same time, the middle frame 231 can also be set as an electrode, serving as a self-capacitance, and/or forming a mutual capacitance with the upper electrode for proximity detection. Furthermore, the bottom of the middle frame is fixed to the circuit board, and the upper electrode, middle frame, and circuit board form an enclosed space, achieving improved robustness of the sensing structure. During the coupling between the upper electrode and the capacitance-to-digital conversion circuit, the capacitance-to-digital conversion circuit is configured to at least acquire the mutual capacitance between the upper electrode and the middle frame for mutual capacitance proximity detection. After the bionic mechanical finger touches the touch object, the microprocessor controls the middle frame and the upper electrode to be coupled to ground via the analog switch array, together with the upper electrode covering the inner lower electrode to form a shield.

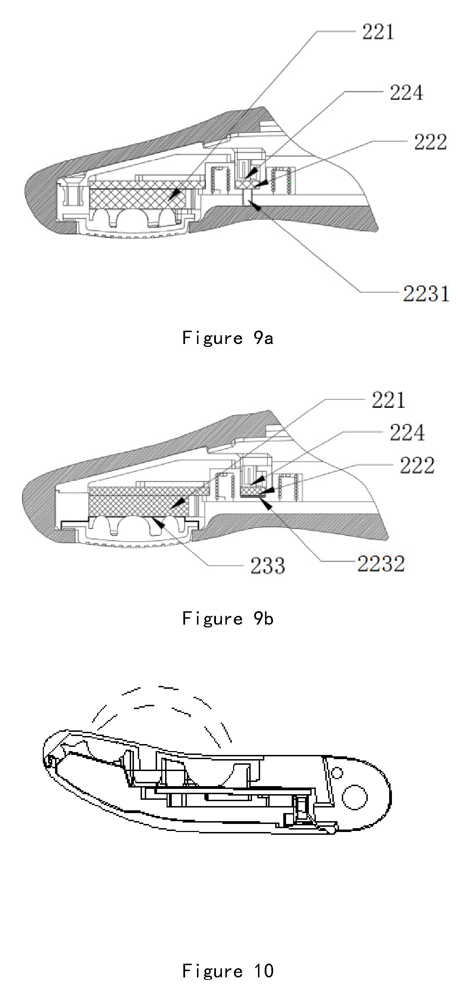

As another alternative exemplary scheme, Figure 10 shows a schematic diagram of the mutual capacitance formed by multiple electrodes. When there are multiple upper electrodes, the upper electrodes are insulated from each other, and each upper electrode is time-division coupled to a data acquisition channel of the capacitance-to-digital converter circuit or ground through an analog switch array. Furthermore, during the coupling between the upper electrodes and the capacitance-to-digital converter circuit , the capacitance-to-digital converter circuit is configured to acquire at least the mutual capacitance between each upper electrode; after the bionic mechanical finger contacts the touch object, the microprocessor controls each upper electrode to be coupled to ground together through the analog switch array.

Taking into account the biomimetic characteristics, frequency of use, and main force distribution of the five fingers, a targeted protrusion distribution design was implemented for the thumb, middle finger, index finger, ring finger, and little finger.

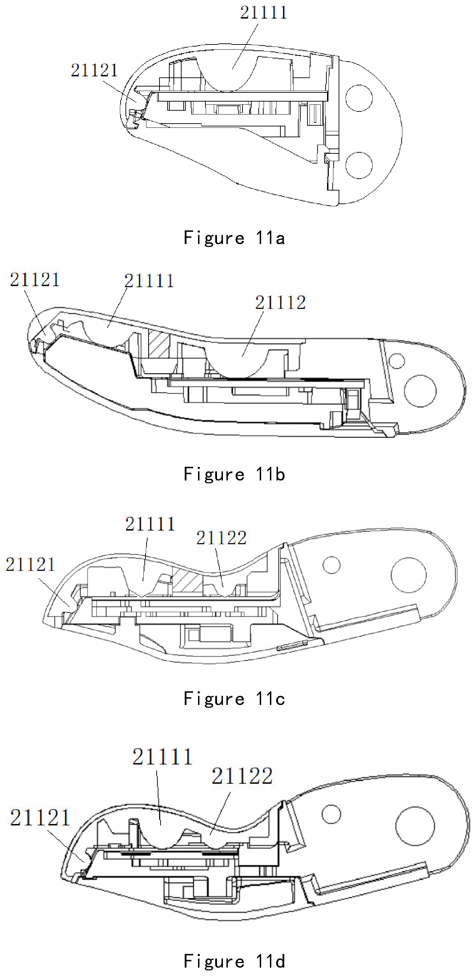

Figure 11a illustrates the design of the thumb's protrusion. When the bionic finger sleeve is placed on the thumb of a robotic hand, based on the thumb's bionic structure, the tactile sensing unit has a first upper electrode located at the fingertip area. Below the first upper electrode are a first main protrusion 21111 and a first auxiliary protrusion 21121. The first main protrusion 21111, located below the arched portion of the fingertip, serves as the first sensing unit for detecting three-dimensional force at the fingertip. The first auxiliary protrusion 21121, located at the tip of the fingertip, serves as the second sensing unit for detecting force at the tip of the fingertip. Since the thumb is relatively short, the protrusion at the fingertip can basically meet the force sensing requirements. The first main protrusion 21111 at the arched portion of the fingertip senses three-dimensional force. Considering the action of the fingertip poking something, the first auxiliary protrusion 21121 at the tip of the fingertip achieves head sensing, while simultaneously supporting the upper electrode in conjunction with the main protrusion.

Figure 11b shows a schematic diagram of the protrusion design of the middle or index finger. When the bionic finger sleeve is used to be placed on the middle or index finger of the robotic hand, based on the bionic structure of the middle or index finger, the tactile sensing unit is provided with a first upper electrode and a second upper electrode. The first upper electrode is located in the fingertip area of the middle or index finger, and the second upper electrode is located in the fingertip area of the middle or index finger. The first upper electrode and the second upper electrode serve as mutual capacitance electrodes for detecting proximity. Below the first upper electrode are a first main protrusion 21111 and a first auxiliary protrusion 21121. The first main protrusion is located below the arched part of the fingertip and serves as the first sensing unit for detecting the three-dimensional force of the fingertip. The first auxiliary protrusion is located at the tip of the fingertip and serves as the second sensing unit for detecting the force on the tip of the fingertip. Below the second upper electrode is a second main protrusion 21112. The second main protrusion 211112 is located below the arched part of the fingertip and serves as the third sensing unit for detecting the three-dimensional force of the fingertip. The middle or index finger is relatively slender and is used frequently in daily life. As the main force sensing finger, the design incorporates the arching of the fingertip and fingertip to form two three-dimensional force sensing elements, as well as the force sensing of the head, to achieve the main force recognition for grasping. At the same time, mutual capacitance is used to complete material recognition based on the different dielectrics of objects.

Figure 11c shows a schematic diagram of the protrusion design of the ring finger. When the bionic finger sleeve is used to place on the ring finger of a robotic hand, the tactile sensing unit has a first upper electrode and a second upper electrode. The first upper electrode is located in the fingertip area of the ring finger, and the second upper electrode is located in the forepart area of the fingertip. The first and second upper electrodes serve as mutual capacitance electrodes for detecting proximity. Below the first upper electrode are a first main protrusion 21111 and a first auxiliary protrusion 21121. The first main protrusion 21111 is located below the arched part of the fingertip and serves as the first sensing unit for detecting three-dimensional force at the fingertip. The first auxiliary protrusion 21121 is located at the tip of the fingertip and serves as the second sensing unit for detecting force at the tip of the fingertip. Below the second upper electrode is a second auxiliary protrusion 21122, which serves as the third sensing unit for detecting normal force on the fingertip. The ring finger serves as an auxiliary gripper, with three-dimensional force detection of the fingertip arch and head force sensing, combined with fingertip normal force detection. Simultaneously, mutual capacitance is used to identify materials based on the different dielectrics of objects.

Figure 11d illustrates the protrusion design of the little finger. When the bionic finger sleeve is placed on the little finger of a robotic hand, the tactile sensing unit has a first upper electrode located at the fingertip and the front part of the fingertip. Below the first upper electrode are a first main protrusion 21111, a first auxiliary protrusion 21121, and a second auxiliary protrusion 21122. The first main protrusion 21111, located below the arched part of the fingertip, serves as the first sensing unit for detecting the three-dimensional force of the fingertip. The first auxiliary protrusion 21121, located at the tip of the fingertip, serves as the second sensing unit for detecting the force at the tip of the fingertip. The second auxiliary protrusion 21122, located below the front part of the fingertip, serves as the third sensing unit for detecting the normal force of the fingertip. The little finger is longer than the thumb but shorter than the middle, index, or ring finger, and has less gripping effect. Therefore, material recognition is not required. The design incorporates three-dimensional force detection at the fingertip arch and force detection at the fingertip, combined with normal force detection at the fingertip, to meet the force perception task for this type of finger.

Furthermore, the elastic surface is a spherical surface, which creates an order-of-magnitude change in the indirect contact area from point contact to surface contact when pressed, ensuring high sensitivity of pressure detection. The radius of the main protrusion is larger than that of the auxiliary protrusion, and it plays the main role in force detection. The radius of the main protrusion is between 0.3-5mm. Based on the spherical surface, the size of the protrusion affects the detection range and sensitivity. If the protrusion is less than 0.3mm, the hemisphere will be flattened when pressed, and the range will be too small to detect. If the protrusion is greater than 5mm, the deformation of the hemisphere by the finger contact force is too large, and the sensitivity will decrease.

Furthermore, the copper layer on the top surface of the circuit board forms each lower electrode. As an option, the circuit board is set to have a thickness of at least 0.1 mm, which isolates or attenuates the influence of the robot's own metal on the lower electrodes. Alternatively, if space is limited, the circuit board is made of thin material, and an active shielding layer is set on the bottom surface of the circuit board to isolate the influence of the robot's own metal through grounding shielding or equipotential shielding. Alternatively, if space is plentiful, the circuit board is designed to be thick enough and form an active shield.

Finally, it should be noted that the above embodiments are only used to illustrate the technical solutions of the present invention, and are not intended to limit the scope of protection of the present invention. Although the present invention has been described in detail with reference to preferred embodiments, those skilled in the art should understand that modifications or equivalent substitutions can be made to the technical solutions of the present invention without departing from the essence and scope of the technical solutions of the present invention.

## Claims

1. A bionic mechanical finger, **characterized by**:
it includes a bionic finger sleeve (100), a tactile sensing unit (200), a capacitor-to-digital converter circuit, a digital processing circuit, and an analog switch array;
the bionic finger sleeve (100) is hollow, with the tactile sensing unit (200),capacitor-to-digital converter circuit, digital processing circuit, and analog switch array built into the hollow part of the bionic finger sleeve (100);
the tactile sensing unit (200) has at least one flexible upper electrode (210) located on the fingertip and/or finger pad, exposed through a window in the bionic finger sleeve (100) or attached to a corresponding flexible part of the bionic finger sleeve (100), The upper electrode (210) has an anthropomorphic shape on the upward side and a protrusion on the downward side, The outer surface of each protrusion is an elastic curved surface, All the upper electrodes (210) together form at least one main protrusion (2111) and at least one auxiliary protrusion (2112), The main protrusion (2111) is located below the arched part of the fingertip and/or finger pad, At least three lower electrodes (221) are provided below the main protrusion (2111), The auxiliary protrusion (2112) is located in other positions, One or two lower electrodes (221) are provided below the auxiliary protrusion (2112), An inner insulating layer (222) with a thickness between 10 nanometers and 1 millimeter is provided between each protrusion and the corresponding lower electrode (221), The downward projection of the protrusion covers at least part of the area of each corresponding lower electrode (221), The indirect contact area of the protrusion on each corresponding lower electrode (221) is affected by the deformation of the upper electrode (210) under external force,The upper electrode (210) is configured to couple to ground when the bionic mechanical finger contacts the touch object, and to form X mutual capacitances or self-capacitances before the bionic mechanical finger contacts the touch object, where X is zero or one or more, each lower electrode (221) involved in pressure detection is acquired through the acquisition channel of the analog switch array coupled capacitor digital conversion circuit, and when the bionic mechanical finger touches the touch object, it is used as a self-capacitance detection electrode to construct a self-capacitance, The main protruding lower electrodes (221) form Y self-capacitances, Y≥3, and the auxiliary protruding lower electrodes (221) form Z self-capacitances, Z≥1,each capacitor formed is configured to have a limited relationship K₁*X+K₂*Y+K₃*Z<= N, where N is 0.05-0.02 seconds, where K₁ is the sampling time of a single corresponding capacitor determined by the size of the upper electrode (210), K₂ is the sampling time of a single self-capacitor determined by the size of the lower electrode (221) of the main protrusion (2111),and K₃ is the sampling time of a single self-capacitor determined by the size of the lower electrode (221) of the auxiliary protrusion (2112),Digital processing circuitry, used for logic processing and/or logic sequence control, coupled with a capacitor-to-digital converter circuit.

2. The bionic mechanical finger according to claim 1 is **characterized in that**:
The digital processing circuit uses an analog switch array to time-division couple the upper electrode (210) to the acquisition channel or ground of the capacitor-to-digital converter circuit.

3. The bionic mechanical finger according to claim 2 is **characterized in that**:
the digital processing circuit is a microprocessor; the microprocessor is configured to control the analog switch array to couple the upper electrode (210) to the capacitor-to-digital converter circuit to form proximity detection before the bionic mechanical finger touches the object, and to control the analog switch array to couple the upper electrode (210) to ground to form a shield after the bionic mechanical finger touches the object.

4. The bionic mechanical finger according to claim 2 or 3 is **characterized in that**:
based on the self-capacitance variation characteristics of each lower electrode (221), the pressure situation is analyzed using a processor-based built-in algorithm,
furthermore, the capacitance obtained from the sampling upper electrode (210) as a proximity detection parameter is analyzed using a spiking neural network (SNN).

5. The bionic mechanical finger according to claim 2 is **characterized in that**:
the upper electrode (210) and the capacitor-to-digital converter circuit, the capacitor-to-digital converter circuit is configured to acquire at least the self-capacitance of the upper electrode (210).

6. The bionic mechanical finger according to claim 2 is **characterized in that**:
the bionic finger sleeve (100) is conductive, and the upper electrode (210) is insulated from the bionic finger sleeve (100),The microprocessor controls the bionic finger sleeve (100) to be coupled or disconnected from ground via an analog switch array, and/or the capacitor-to-digital converter circuit couples the bionic finger sleeve (100) via the analog switch array.

7. The bionic mechanical finger according to claim 6 is **characterized in that**:
the upper electrode (210) and the capacitance-to-digital converter circuit, the capacitance-to-digital converter circuit is configured to acquire at least the mutual capacitance between the upper electrode (210) and the bionic finger sleeve (100), after the bionic mechanical finger comes into contact with the object being touched, the microprocessor controls the bionic finger sleeve (100) and the upper electrode (210) to be coupled to the ground through an array of analog switches.

8. The bionic mechanical finger according to claim 6 is **characterized in that**:
the tactile sensing unit (200) has a middle frame (231) and a circuit board (222) with a capacitor-to-digital converter circuit and an analog switch array fixed in place, the middle frame (231) is located on the circuit board (222) to support the upper electrode (210), and the lower electrode (221) is located on the top surface of the circuit board (222),The raised curved surface passes through the middle frame (231) and indirectly contacts the lower electrode (221) through the inner insulating layer.

9. The bionic mechanical finger according to claim 6 is **characterized in that**:
the bionic finger sleeve (100) has a window, and the outer surface of the upper electrode (210) is covered with an outer insulating layer (212) and exposed through the window via the outer insulating layer (212),Alternatively, the portion of the bionic finger covering the upper electrode (210) is insulated from other portions of the bionic finger, which have conductive properties to be time-divisionally coupled to the acquisition channel or ground of the capacitor-to-digital converter circuit.

10. The bionic mechanical finger according to claim 2 is **characterized in that**:
the bionic finger sleeve (100) is insulated, and the tactile sensing unit (200) is equipped with a circuit board (222) and a conductive frame (231);
the middle frame (231) is located on the circuit board (222) and is used to support the upper electrode (210). The middle frame (231) is located around the upper electrode (210) and is insulated from it. The microprocessor controls the middle frame (231) to be coupled or disconnected from ground via an analog switch array, and/or the capacitor-to-digital converter circuit is coupled to the middle frame (231) via an analog switch array.

11. The bionic mechanical finger according to claim 10 is **characterized in that**:
the bottom of the middle frame (231) is fixed to the circuit board (222), and the upper electrode (210), the middle frame (231), and the circuit board (222) together form an enclosed space;
the upper electrode (210) and the capacitor-to-digital converter circuit, the capacitor-to-digital converter circuit is configured to acquire at least the mutual capacitance between the upper electrode (210) and the middle frame (231);
after the bionic mechanical finger comes into contact with the object being touched, the microprocessor controls the middle frame (231) and the upper electrode (210) to be coupled to ground through an analog switch array.

12. The bionic mechanical finger according to claim 2 or 3 is **characterized in that**:
the upper electrode (210) has at least two electrodes that are insulated from each other; each upper electrode (210) is time-division coupled to a data acquisition channel or ground of a capacitor-to-digital converter circuit via an analog switch array.

13. The bionic mechanical finger according to claim 12 is **characterized in that**:
the upper electrode (210) with the capacitor-to-digital converter circuit, the capacitor-to-digital converter circuit is configured to acquire at least the mutual capacitance between the individual upper electrodes (210);
after the bionic mechanical finger comes into contact with the object being touched, the microprocessor controls the various upper electrodes (210) to be coupled to ground through an array of analog switches.

14. The bionic mechanical finger according to claim 1 is **characterized in that**:
the bionic finger sleeve (100) is used to be placed on the thumb of the robotic hand, the tactile sensing unit (200) is provided with a first upper electrode, which is located in the fingertip area of the thumb or ring finger, below the first upper electrode are a first main protrusion (21111) and a first auxiliary protrusion (21121), the first main protrusion (21111) is located below the arched part of the fingertip as a first sensing unit for detecting the three-dimensional force of the fingertip, and the first auxiliary protrusion (21121) is located at the front end of the fingertip as a second sensing unit for detecting the force on the front end of the fingertip.

15. The bionic mechanical finger according to claim 1 is **characterized in that**:
the bionic finger sleeve (100) is used to be placed on the middle or index finger of the robotic hand, The tactile sensing unit (200) is provided with a first upper electrode and a second upper electrode, The first upper electrode is located in the fingertip area of the middle or index finger, and the second upper electrode is located in the fingertip area of the middle or index finger, The first upper electrode and the second upper electrode serve as mutual capacitance electrodes for detecting proximity, below the first upper electrode, there is a first main protrusion (21111) and a first auxiliary protrusion (21121), The first main protrusion (21111) is located below the arched part of the fingertip and serves as a first sensing unit for detecting three-dimensional force at the fingertip, The first auxiliary protrusion (21121) is located at the tip of the fingertip and serves as a second sensing unit for detecting force at the tip of the fingertip, Below the second upper electrode, there is a second main protrusion (21112), The second main protrusion (21112) is located below the arched part of the fingertip and serves as a third sensing unit for detecting three-dimensional force at the fingertip.

16. The bionic mechanical finger according to claim 1 is **characterized in that**:
the bionic finger sleeve (100) is used to be placed on the ring finger of the robotic hand, the tactile sensing unit (200) is provided with a first upper electrode and a second upper electrode, The first upper electrode is located in the fingertip area of the ring finger, and the second upper electrode is located in the front part of the fingertip of the ring finger, The first upper electrode and the second upper electrode serve as mutual capacitance electrodes for detecting proximity, Below the first upper electrode, there is a first main protrusion (21111) and a first auxiliary protrusion (21121), the first main protrusion (21111) is located below the arched part of the fingertip and serves as a first sensing unit for detecting three-dimensional force at the fingertip, The first auxiliary protrusion (21121) is located at the front end of the fingertip and serves as a second sensing unit for detecting force at the front end of the fingertip, Below the second upper electrode, there is a second auxiliary protrusion (21122), which serves as a third sensing unit for detecting normal force at the fingertip.

17. The bionic mechanical finger according to claim 1 is **characterized in that**:
the bionic finger sleeve (100) is used to be placed on the little finger of the robotic hand, The tactile sensing unit (200) is provided with a first upper electrode, which is located in the fingertip area and the front part of the fingertip of the little finger, Below the first upper electrode, there is a first main protrusion (21111), a first auxiliary protrusion (21121),and a second auxiliary protrusion (21122), the first main protrusion (21111) is located below the arched part of the fingertip as a first sensing unit for detecting the three-dimensional force of the fingertip, the first auxiliary protrusion (21121) is located at the front end of the fingertip as a second sensing unit for detecting the force on the front end of the fingertip, the second auxiliary protrusion (21122) is located below the front part of the fingertip as a third sensing unit for detecting the normal force of the fingertip.

18. The bionic mechanical finger according to claim 1 is **characterized in that**:
the outer surface of the protrusion is a spherical curved surface, and the radius of the main protrusion (2111) is larger than that of the auxiliary protrusion (2112).

19. The bionic mechanical finger according to claim 18 is **characterized in that**:
the radius of the main protrusion (2111) is between 0.3-5mm.

20. The bionic mechanical finger according to claim 1 is **characterized in that**:
includes a circuit board (222), wherein the copper layer on the top surface of the circuit board (222) forms each of the lower electrodes (221);
the circuit board (222) has a thickness of at least 0.1 mm, and/or has an active shielding layer on the bottom surface of the circuit board (222).

21. A robotic hand, **characterized in that** it includes a bionic mechanical finger as described in any one of claims 1-20.
